# EUROPÄISCHE PATENTANMELDUNG

(11) **EP 0 873 903 A2**
(43) Veröffentlichungstag der Anmeldung: **28.10.1998**
(21) Anmeldenummer: 98103881.3
(22) Anmeldetag: 05.03.1998
(51) Int. Cl.: B60N 2/00

(54) **Vorrichtung mit einem Foliendrucksensor zur Sitzbelegungserkennung für einen Fahrersitz**

(30) Priorität: 24.04.1997 DE 19717273
(71) Anmelder: Volkswagen Aktiengesellschaft, 38436 Wolfsburg (DE)
(72) Erfinder: Mai, Rudolf, 38442 Wolfsburg (DE)

(57) **Zusammenfassung**

Es wird eine Vorrichtung mit einem Foliendrucksensor zur Sitzbelegungserkennung und einer Sitzheizung für einen Fahrzeugsitz beschrieben.

Der Foliendrucksensor besteht aus zwei laminierten Kunststoffträgerfolien, wobei die erste Trägerfolie mit einem Halbleiterpolymer (2) und die zweite Trägerfolie mit zwei Leiterbahnen (3, 3') beschichtet ist, welche von Anschlußpunkten (4, 4') ausgehend Verbindungsleitungen zumindest einem räumlich abgegrenzten drucksensitiven Sensorelement (1) bilden, wo die Leiterbahnen zu kammartigen, interdigitierend angeordneten Elektroden ausgebildet sind. Die elektrische Sitzheizung umfaßt einen durch Stromdurchgang aufheizbaren Leiter.

Erfindungsgemäß sind Teile der auf der zweiten Trägerfolie des Foliendrucksensors aufgebrachten Leiterbahnen (3, 3') als aufheizbarer Leiter der Sitzheizung verwendbar.

## Beschreibung

Die Erfindung betrifft eine Vorrichtung mit einem Foliendrucksensor zur Sitzbelegungserkennung für einen Fahrzeugsitz, bestehend aus zwei zusammenlaminierten Kunststoffträgerfolien, wobei die erste Trägerfolie mit einem Halbleiterpolymer und die zweite Trägerfolie mit zwei Leiterbahnen beschichtet ist, welche von Anschlußpunkten ausgehend Verbindungsleitungen zu mindestens einem räumlich abgegrenzten drucksensitiven Sensorelement bilden, wo die Leiterbahnen zu kammartigen, interdigitierend angeordneten Elektroden ausgebildet sind, und mit einer elektrischen Sitzheizung, die einen durch Stromdurchgang aufheizbaren Leiter umfaßt, sowie ein Verfahren zum Betreiben einer Vorrichtung mit einem Foliendrucksensor zur Sitzbelegungserkennung für einen Fahrzeugsitz und mit einer Sitzheizung.

Aus der deutschen Offenlegungsschrift DE 42 37 072 C1 ist ein resistiver Foliendrucksensor, insbesondere zur Sitzbelegungserkennung für einen Fahrzeugsitz, bekannt. Der Foliendrucksensor besteht aus zwei zusammenlaminierten Polymerlagen, wobei die eine Polymerlage mit einem Halbleitermaterial und die andere mit zwei Leiterbahnen beschichtet ist. Innerhalb räumlich abgegrenzter, Sensorelemente bildender Bereiche, weisen die Leiterbahnen berührungslos ineinandergreifende Kammstrukturen auf. Wird das Sensorelement mit einer Normalkraft belastet, schaltet das Halbleitermaterial benachbart angeordnete Kontaktfinger der Kammstrukturen kraftabhängig mehr oder weniger parallel. Zwischen den beiden Leiterbahnen liegt damit ein elektrischer Widerstand an, der mit zunehmender Druckkraft abnimmt.

Eine mögliche Anwendung eines resistiven Foliendrucksensors als Sitzbelegungssensor für einen Fahrzeugsitz ist in der deutschen Patentschrift DE 44 06 897 C1 beschrieben. Es wird ein Sitzbelegungssensor vorgeschlagen, der einen vorderen und einen hinteren Sensorbereich aufweist, die separat auswertbar sind. Damit kann eine die Schutzwirkung eines Airbags vermindernde Sitzposition des Beifahrers nahe der vorderen Sitzkante des Sitzpolsters ermittelt und gegebenenfalls optisch oder akustisch angezeigt werden. Als weitere Maßnahme bei nicht ordnungsgemäßer Sitzposition kann die Sperrung einer Airbagauslösung vorgesehen sein.

Des weiteren ist es zwecks Erhöhung des Fahrzeugkomforts bekannt, einen Fahrzeugsitz beheizbar auszubilden. Bekannte Fahrzeugsitze verfügen dazu über eine in die Sitzfläche integrierte Heizwicklung, die gegebenenfalls unter Zwischenschaltung eines Schalters nach Bedarf oder automatisch in Abhängigkeit von der Temperatur mit der Batterie des Fahrzeuges verbindbar ist.

Aus der deutschen Offenlegungsschrift DE 41 10 702 A1 ist nun ein Fahrzeugsitz mit einer elektrischen Sitzheizung und Mitteln zur Erkennung der Sitzbelegung bekannt, bei dem zumindest Teile der Sitzheizung als Mittel zur Erkennung der Sitzbelegung dienen. Die elektrische Sitzheizung umfaßt einen durch Stromdurchgang aufheizbaren Leiter, wobei dieser Leiter zumindest als Teil eines Sitzbelegungssensors ausgestaltet ist, indem der Leiter eine erste Elektrode des mehrere Elektroden aufweisenden kapazitiven Sensors darstellt. Ein solcher kapazitiver Sensor ist beispielsweise in der deutschen Patentschrift DE 36 35 644 C2 beschrieben. Bei diesem Sensor bildet eine in einem Sitz integrierte Sitzelektrode mit der Fahrzeugkarosserie als Gegenelektrode einen Kondensator. Der Kondensator erhöht durch eine Person seine Kapazität. Mit Hilfe dieses kapazitiven Sensors kann zwar festgestellt werden, ob sich eine Person auf dem Fahrzeugsitz befindet. Er ist jedoch nicht einsetzbar, wenn es darum geht, eine Sitzbelegung beispielsweise durch ein Kind oder einen Erwachsenen sicher zu erkennen.

Es ist die Aufgabe der Erfindung eine Vorrichtung mit einem Foliendrucksensor zur genauen und detaillierten Sitzbelegungs- und Gewichtserkennung eines Fahrzeugsitzes und mit einer Sitzheizung zu schaffen, welche auf einfache Weise herstellbar ist und damit einen preiswerten konstruktiven Aufbau eines Fahrzeugsitzes erlaubt.

Des weiteren liegt der Erfindung die Aufgabe zugrunde, ein Verfahren zur Inbetriebnahme der Vorrichtung zu schaffen.

Die Aufgabe wird durch die Merkmale der Patentansprüche 1, 7 und 9 gelöst. Vorteilhafte Aus- und Weiterbildungen sind in den Unteransprüchen dargestellt.

Gemäß der Erfindung werden bei einem Foliendrucksensor bestehend aus zwei zusammenlaminierten Kunststoffträgerfolien, wobei die erste Trägerfolie mit einem Halbleiterpolymer und die zweite Trägerfolie mit zwei Leiterbahnen beschichtet ist, zumindest Teile der auf der zweiten Trägerfolie aufgebrachten Leiterbahnen als aufheizbare Leiter der Sitzheizung verwendet.

Nach einer vorteilhaften Ausbildung der Erfindung werden bei der Beaufschlagung der Leiterbahnen als Sitzheizung die Sensorelemente des Foliendrucksensors elektrisch überbrückt, wodurch die hochohmigen, insbesondere im Kiloohmbereich liegenden Sensorelemente aus dem Sitzheizungskreis genommen werden. Dies kann durch die Parallelschaltung eines Schaltmittels geschehen, das bei Beaufschlagung der Sitzheizung geschlossen ist.

Eine weitere Möglichkeit besteht darin, parallel zum Sensorelement eine entsprechend dimensionierte Diode vorzusehen. Die Beaufschlagung der Sitzheizung erfolgt dann in Durchlaßrichtung der Diode, so daß wegen des hochohmigen Widerstandes des Sensorelementes der gesamte Heizstrom über die parallele Diode fließt. Zur Sitzbelegungserkennung werden die Leiterbahnen entgegengesetzt polarisiert beaufschlagt, so daß die parallel zum Sensorelement geschaltete Diode sperrt. Der Meßstrom fließt ausschließlich über das Sensorelement.

Zum Schutz des Sensorelementes weist das Sensorelement eine Schutzbeschaltung auf, welche in Durchlaßrichtung der dem Sensorelement parallel geschalteten ersten Diode den Stromfluß durch das Sensorelement verhindert. Nach einer Ausführungsform kann hierfür zumindest eine Diode vorgesehen sein.

In dem Fall, daß der Sitzbelegungssensor mehrere Sensorelemente aufweist werden bei dem Betrieb der Sitzheizung die Sensorelemente einzeln und/oder in Gruppen elektrisch überbrückt.

Das erfindungsgemäße Verfahren sieht vor, daß die Sitzheizung gepulst, insbesondere pulsbreitenmoduliert nach der Temperatur gesteuert, beaufschlagt wird. Die Sitzbelegungserkennung erfolgt dementsprechend in den Zeiten zwischen den Pulsen. Dabei ist es jedoch nicht erforderlich, daß dies grundsätzlich zwischen allen Pulsen erfolgt. Es können definierte Zeitabstände zur Durchführung der Sitzbelegungserkennung festgelegt werden.

Nach einer Ausbildung der Erfindung erfolgt eine Beaufschlagung der Sitzheizung nur nach einer erkannten Sitzbelegung, wodurch eine unnötige Belastung der Fahrzeugbatterie vermieden wird.

Eine andere erfindungsgemäße Vorrichtung mit einem Foliendrucksensor und einer Sitzheizung sieht vor, die zweite Trägerfolie des Foliendrucksensors zusätzlich mit einer an ihren Enden kontaktierbaren Leiterbahn, die als Leiter für die Sitzheizung dient, zu beschichten.

Der Vorteil der Erfindung besteht darin, daß Mittel eines Foliendrucksensors zur Sitzbelegungserkennung eines Fahrzeugsitzes teilweise für die Sitzheizung des Fahrzeugsitzes verwendet werden. Damit läßt sich ein besonders einfacher und auch preiswerter konstruktiver Aufbau einer Sitzheizung in Verbindung mit einem Foliendrucksensor realisieren.

Nachfolgend wird die Erfindung anhand eines Ausführungsbeispiels näher beschrieben. Die zugehörigen Zeichnungen zeigen:
- Figur 1: eine erfindungsgemäße Vorrichtung mit einem Foliendrucksensor und einer Sitzheizung und
- Figur 2: ein weiteres Ausführungsbeispiel.

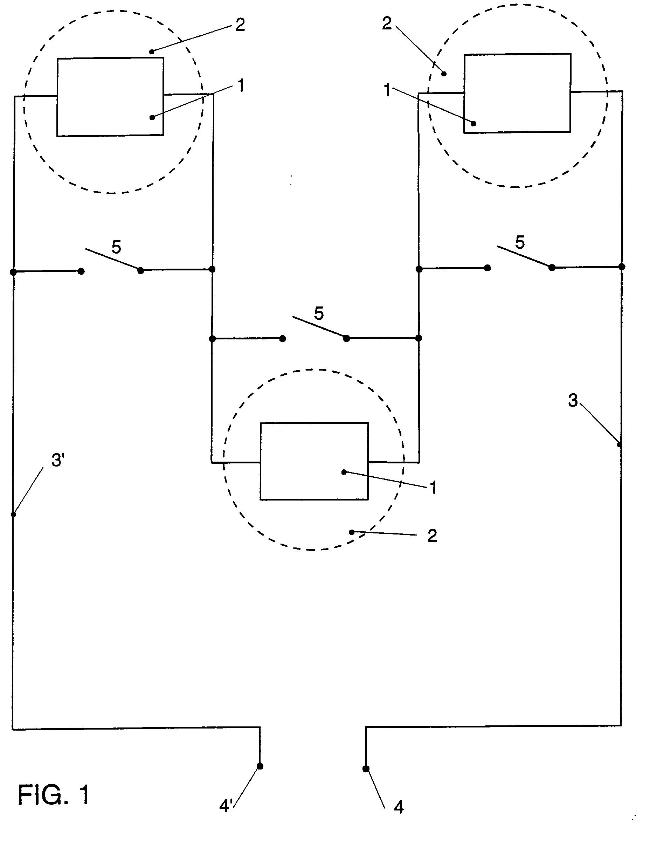

Der Foliendrucksensor in Figur 1 besteht aus zwei zusammenlaminierten Kunststoffträgerfolien. Die erste Trägerfolie ist mit Bereichen 2 eines Halbleiterpolymers und die zweite Trägerfolie mit Leiterbahnen 3, 3' beschichtet. Die Leiterbahnen bilden von Anschlußpunkten 4, 4' ausgehend Verbindungsleitungen zu den räumlich abgegrenzten drucksensitiven Sensorelementen 1. Die drucksensitiven Sensorelemente 1 wiederum weisen eine nicht dargestellte, bekannte kammartige Struktur aus mehreren Kontaktfingern auf. Die Kontaktfinger werden durch verzweigungsfreie Leiterbahnschlingen und durch von Leiterbahnen 3, 3' abzweigende Stichleitungen gebildet. Die Leiterbahnen sind vergleichsweise dick ausgeführt, um den gesamten Leitungswiderstand gering zu halten. Die Stichleitungen hingegen sind dünner ausgeführt. Damit kann die Empfindlichkeit des Sensorelementes gesteigert werden, indem eine höhere Zahl von Stichleitungen auf gleicher Fläche untergebracht werden können. Zur Realisierung der Sitzheizung sind parallel zu den schematisch dargestellten Sensorelementen 1 elektronische Schaltmittel vorgesehen. Diese Schaltmittel 5 sind während der Durchführung einer Sitzbelegungserkennung geöffnet, so daß der gesamte Meßstrom über die hochohmigen Sensorelemente 1 fließt. Während der Beaufschlagung der erfindungsgemäßen Vorrichtung als Sitzheizung sind die elektronischen Schaltmittel 5 geschlossen und die hochohmigen Sensorelemente 1 werden kurzgeschlossen. Aufgrund des geringen Leitungswiderstandes fließt der gesamte Heizstrom über den Leitungsstrang des Schaltmittels 5.

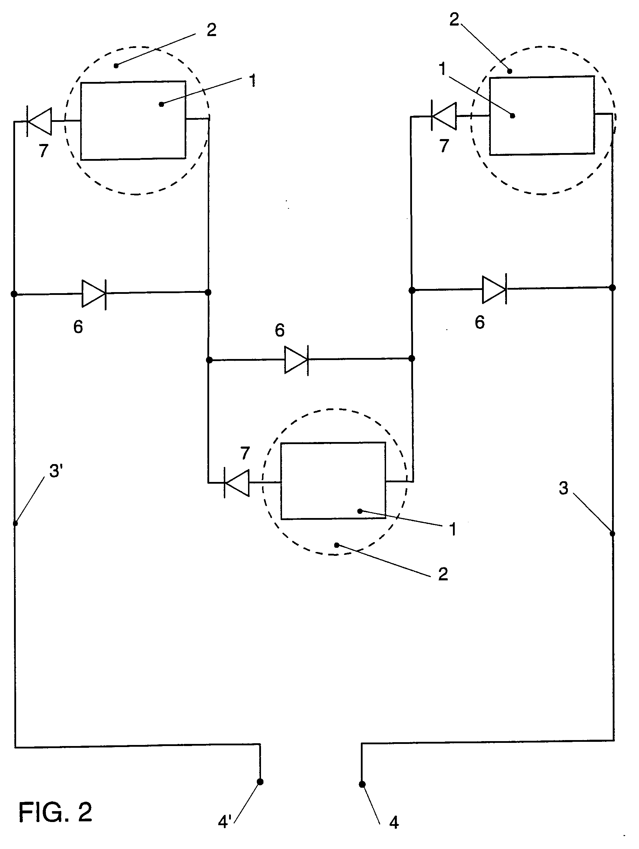

Eine weitere Möglichkeit der Realisierung einer Sitzheizung mit Mitteln eines Foliendrucksensor ist in Figur 2 gezeigt. Bei dieser Schaltungsanordnung sind zu den Sensorelementen 1 Dioden 6 derart parallel geschaltet, daß ihre Durchlaßrichtung der Richtung des Heizstroms entspricht. Auch hier gilt, daß aufgrund der Hochohmigkeit der Sensorelemente 1 der gesamte Heizstrom über den Diodenstrang fließt. Zusätzlich können jedoch als Schutzmaßnahme bezüglich der Richtung des Heizstroms den Sensorelementen 1 Dioden 7 in Reihe vorgeschaltet werden, die den Heizstrom über die Sensorelemente sperren. Zur Durchführung der Sitzbelegungserkennung erfolgt eine Beaufschlagung der erfindungsgemäßen Vorrichtung mit entgegengesetzter Poliarität, damit sperren die Dioden 6 und der gesamte Meßstrom fließt über die Dioden 7 und die Sensorelemente 1.

Da eine Sitzbelegungserkennung nur bei nicht in Betrieb genommener Sitzheizung möglich ist, erfolgt die Beaufschlagung der Sitzheizung gepulst, vorzugsweise in Abhängigkeit der Temperatur pulsbreitmoduliert. In den Pausen zwischen den Pulsen kann eine Sitzbelegungserkennung erfolgen. Es wird im Ausführungsbeispiel nach dem Motorstart eine Sitzbelegungserkennung durchgeführt. Ist der Fahrzeugsitz belegt und die Sitzheizung aktiviert, wird diese pulsbreitmoduliert angesteuert. In definierten Zeitabständen kann dann in den Zeiten zwischen den Pulsen der Sitzheizungsansteuerung eine Sitzbelegungserkennung erfolgen. Dies ist nötig, da der Motor bei einem kurzen Halt nicht immer abgeschaltet wird und ein Beifahrer den Sitz verlassen oder auf dem Sitz Platz nehmen kann. Ein anderer Grund liegt darin, daß insbesondere Kinder während der Fahrt ihre Position auf den Sitzen verändern.

### BEZUGSZEICHENLISTE

- 1: Sensorelement
- 2: Bereiche eines Halbleiterpolymers
- 3, 3': Leiterbahnen
- 4, 4': Anschlußpunkte
- 5: Schaltmittel
- 6: Dioden
- 7: Dioden

## Patentansprüche

1. Vorrichtung mit einem Foliendrucksensor zur Sitzbelegungserkennung für einen Fahrzeugsitz, bestehend aus zwei zusammenlaminierten Kunststoffträgerfolien, wobei die erste Trägerfolie mit einem Halbleiterpolymer (2) und die zweite Trägerfolie mit zwei Leiterbahnen (3, 3') beschichtet ist, welche von Anschlußpunkten (4, 4') ausgehend Verbindungsleitungen zu mindestens einem räumlich abgegrenzten drucksensitiven Sensorelement (1) bilden, wo die Leiterbahnen zu kammartigen, interdigitierend angeordneten Elektroden ausgebildet sind, und mit einer elektrischen Sitzheizung, die einen durch Stromdurchgang aufheizbaren Leiter umfaßt, dadurch gekennzeichnet, daß zumindest Teile der auf der zweiten Trägerfolie des Foliendrucksensors aufgebrachten Leiterbahnen (3, 3') als aufheizbarer Leiter der Sitzheizung verwendbar sind.

2. Vorrichtung nach Anspruch 1, dadurch gekennzeichnet, daß das räumlich abgegrenzte Sensorelement (1) bei der Beaufschlagung zumindest von Teilen der Leiterbahnen (3, 3') als Sitzheizung elektrisch überbrückt ist.

3. Vorrichtung nach Anspruch 2, dadurch gekennzeichnet, daß dem räumlich abgegrenzten Sensorelement (1) zur elektrischen Überbrückung ein Schaltmittel (5) parallel geschaltet ist.

4. Vorrichtung nach Anspruch 1 oder 2, dadurch gekennzeichnet, daß dem räumlich abgegrenzten Sensorelement (1) eine erste Diode (6) parallel geschaltet ist und die Leiterbahnen (3, 3') mit entgegengesetzter Polarisation beaufschlagbar sind.

5. Vorrichtung nach Anspruch 3 oder 4, dadurch gekennzeichnet, daß dem Sensorelement (1) eine Schutzbeschaltung (7) zugeordnet ist, welche den Stromfluß über das Sensorelement (1) in Durchlaßrichtung der dem Sensorelement (1) parallel geschalteten ersten Diode (6) sperrt.

6. Vorrichtung nach Anspruch 5, dadurch gekennzeichnet, daß in Durchlaßrichtung der dem Sensorelement (1) parallel geschalteten ersten Diode (6) dem Sensorelement (1) eine zweite Diode (7) mit entgegengesetzter Durchlaßrichtung in Reihe vorgeschaltet ist.

7. Verfahren zum Betreiben einer Vorrichtung mit einem Foliendrucksensor zur Sitzbelegungserkennung für einen Fahrzeugsitz und einer Sitzheizung nach einem der Ansprüche 1 bis 6, dadurch gekennzeichnet, daß die Sitzheizung gepulst beaufschlagt wird und zumindest in definierten Zeitabständen in den Zeiten zwischen den Pulsen eine Sitzbelegungserkennung erfolgt.

8. Verfahren nach Anspruch 7, dadurch gekennzeichnet, daß die Beaufschlagung der Sitzheizung nur nach einer erkannten Sitzbelegung erfolgt.

9. Vorrichtung mit einem Foliendrucksensor zur Sitzbelegungserkennung für einen Fahrzeugsitz, bestehend aus zwei zusammenlaminierten Kunststoffträgerfolien, wobei die erste Trägerfolie mit einem Halbleiterpolymer (2) und die zweite Trägerfolie mit zwei Leiterbahnen (3, 3') beschichtet ist, welche von Anschlußpunkten (4, 4') ausgehend Verbindungsleitungen zu mindestens einem räumlich abgegrenzten drucksensitiven Sensorelement (1) bilden, wo die Leiterbahnen (3, 3') zu kammartigen, interdigitierend angeordneten Elektroden ausgebildet sind, und mit einer elektrischen Sitzheizung, die einen durch Stromdurchgang aufheizbaren Leiter umfaßt, dadurch gekennzeichnet, daß die zweite Trägerfolie des Foliendrucksensors zusätzlich mit einer an ihren Enden kontaktierbaren Leiterbahn für die Sitzheizung beschichtet ist.
